# EUROPEAN PATENT APPLICATION

(11) **EP 4 765 358 A1**
(43) Date of publication of application: **24.06.2026**
(21) Application number: 24221908.7
(22) Date of filing: 19.12.2024
(51) Int. Cl.: H01M 50/105, H01M 50/124, H01M 50/178, H01M 50/184, H01M 50/193, H01M 50/533, H01M 50/553, H01M 50/682, H01M 50/557

(54) **TAB STRUCTURE AND POUCH CELL**

(71) Applicant: Farasis Energy (Ganzhou) Co., Ltd., Ganzhou, Jiangxi 341000 (CN)
(72) Inventor: Li, Sensheng, Ganzhou (CN); Zhong, Enqiang, Ganzhou (CN); Liu, Yaoyun, Ganzhou (CN); Liang, Zhongchun, Ganzhou (CN); Zhang, Zhenxian, Ganzhou (CN); Wei, Senfeng, Ganzhou (CN)
(74) Representative: Garavelli, Paolo

(57) **Abstract**

Disclosed are a tab structure and a pouch cell comprising the tab structure. The tab structure comprises a conductive portion and a storage container, wherein the storage container is fixedly mounted at the bottom of the conductive portion, and the interior of the storage container is a cavity for storing electrolyte. The tab structure is provided with the storage container for storing electrolyte, and the electrolyte in the storage container replenishes the needs of a battery cell in a timely manner, thereby increasing the electrolyte retention of the pouch cell. In this way, the problem of insufficient electrolyte in the later stage of the pouch cell can be solved effectively, thereby improving the cycle performance of the cell and further increasing the service life of the pouch cell.

## Description

### Field of the Invention

The present disclosure belongs to the technical field of pouch cells and particularly relates to a tab structure and a pouch cell comprising the tab structure.

### Background of the Invention

As one of the main packages of power batteries, pouch cells have the advantages of high energy density and good safety. However, due to the problem of pouch packaging, the designed electrolyte filling margin is relatively small, especially during the exhaust process and manufacturing process. The envelope is vacuum-packed, the outer packaging will shrink and squeeze, and the free electrolyte in the case will be squeezed out and vacuumed away, eventually leading to a relatively small amount of electrolyte retention in batteries. The common life problem of pouch cells is insufficient electrolyte in the later stage. It can be seen that increasing the electrolyte retention of pouch cells can greatly increase the service life of pouch cells.

In the prior art, the tab of the pouch cells is usually a straight plate structure, which is placed in a punching pit of aluminum-plastic films after being welded to a coil core, and the tab space and packaging position width space are reserved. At the tab space and packaging position width space, upper and lower aluminum-plastic films are close to each other or the aluminum-plastic films are attached to the tabs, and this causes the appearance of the aluminum-plastic films to be dented and the space inside the aluminum-plastic films to become smaller, thus affecting the electrolyte storage of the pouch cells.

### Summary of the Invention

The technical problem to be solved by the present disclosure is to provide a tab structure and a pouch cell comprising the tab structure in view of the above deficiencies in the prior art. The tab structure is provided with a storage container for storing electrolyte, and the electrolyte in the storage container can replenish the needs of a battery cell in time, thereby improving the cycle performance of the cell.

In order to solve the above problem, the present disclosure adopts the following technical solutions:
A tab structure, comprising a conductive portion and a storage container, wherein the storage container is fixedly mounted at the bottom of the conductive portion, and the interior of the storage container is a cavity for storing electrolyte.

Preferably, an outer surface of the storage container is coated with an insulating corrosion-resistant coating.

Preferably, the material of the insulating corrosion-resistant coating is selected from the group consisting of epoxy resin, polytetrafluoroethylene, silicone rubber, polyimide and a combination thereof.

Preferably, the cross-sectional shape of the storage container is circular.

Preferably, the cross-sectional shape of the conductive portion is rectangular.

The present disclosure further provides a pouch cell, comprising a roll core body, a roll core tab and an aluminum-plastic film and further comprising the described tab structure, wherein the width of the roll core body is greater than the width of the storage container, the roll core tab is split into two equal pieces, the split pieces of the roll core tab are respectively fitted to the outer surface of the storage container from two sides and are connected to the conductive portion, the roll core body, after being connected to the tab structure, is placed in a punching pit of the aluminum-plastic film, and the aluminum-plastic film is connected to two sides of the conductive portion, thus completing top seal fixation.

Preferably, a first hot melt adhesive layer is provided on each of the two sides of the conductive portion, and a second hot melt adhesive layer is provided inside the aluminum-plastic film.

Preferably, the first hot melt adhesive layer is located above a joint between the roll core tab and the conductive portion.

Preferably, the first hot melt adhesive layer employs a PP adhesive.

Preferably, the second hot melt adhesive layer employs a PP adhesive.

The tab structure in the present disclosure is provided with a storage container for storing electrolyte at the bottom. In addition to the connection function, the tab structure also has the function of storing electrolyte. The electrolyte in the storage container can replenish the needs of the battery cell in a timely manner, thereby improving the cycle performance of the cell. In this way, the problem of insufficient electrolyte in the later stage of the pouch cell can be solved effectively, thereby increasing the electrolyte retention of the pouch cell and further increasing the service life of the pouch cell. The electrolyte in the storage container will be used to replenish the consumption of electrolyte during the cycle of the cell, thereby increasing the service life of the cell.

### Brief Description of the Drawings

FIG. 1 is a top view of a tab structure in Embodiment 1 of the present disclosure;
FIG. 2 is a side cross-sectional view of the tab structure in Embodiment 1 of the present disclosure; and
FIG. 3 shows an internal structure of a pouch cell in Embodiment 2 of the present disclosure.

In the figures, 100 - conductive portion, 110 - storage container, 200 - roll core body, 210 - roll core tab, 300 - first hot melt adhesive layer.

### Detailed Description of the Invention

The technical solution of the present disclosure will be described clearly and completely below in conjunction with the accompanying drawings of the present disclosure, and it will be apparent that the embodiments described herein are merely some, not all of the embodiments of the present disclosure. Based on the embodiments of the present disclosure, all other embodiments obtained by those of ordinary skill in the art without creative work fall within the scope of the present disclosure.

In the description of the present disclosure, it should be noted that the orientation or position relationships indicated by terms such as "up", are based on the orientation or position relationships shown in the accompanying drawings and are used only for the convenience of describing the present disclosure and simplifying the description, rather than indicating or implying that the device or element referred to must have a specific orientation, be constructed and operated in a specific orientation. Therefore, they should not be construed as limiting the present disclosure.

In the description of the present disclosure, the terms "first" and "second" are used for descriptive purposes only and are not to be understood as indicating or implying relative importance.

In the description of the present disclosure, it should be noted that, unless otherwise expressly specified and limited, the terms such as "connect", "arranged", "mount", and "fix" shall be understood broadly. For example, they may refer to fixed connection, detachable connection, or integrated connection; they may refer to direct connection, or indirect connection by an intermediate medium, or connection within two components. For those skilled in the art, the specific meanings of the above terms herein can be understood according to specific circumstances.

The present disclosure provides a tab structure, comprising a conductive portion and a storage container, wherein the storage container is fixedly mounted at the bottom of the conductive portion, and the interior of the storage container is a cavity for storing electrolyte.

The present disclosure further provides a pouch cell, comprising a roll core body, a roll core tab and an aluminum-plastic film and further comprising the described tab structure, wherein the width of the roll core body is greater than the width of the storage container, the roll core tab is split into two equal pieces, the split pieces of the roll core tab are respectively fitted to the outer surface of the storage container from two sides and are connected to the conductive portion, the roll core body, after being connected to the tab structure, is placed in a punching pit of the aluminum-plastic film. The aluminum-plastic film is connected to two sides of the conductive portion, thus completing top seal fixation.

### Embodiment 1

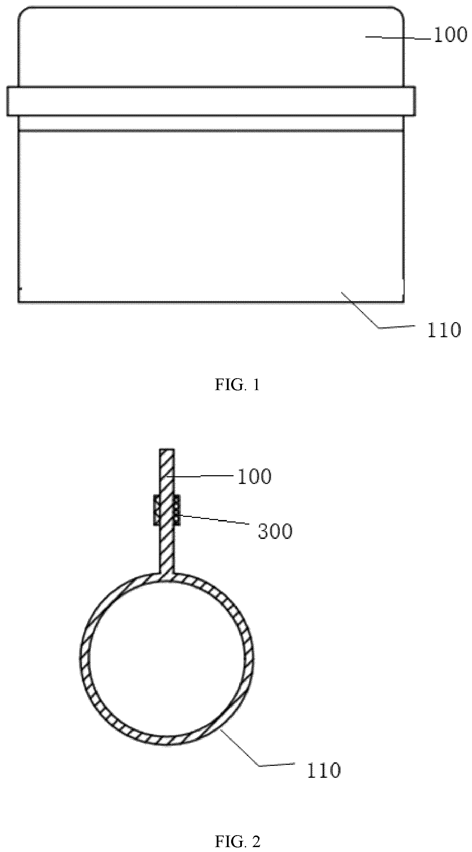

As shown in FIGs. 1-3, this embodiment provides a tab structure, comprising a conductive portion 100 and a storage container 110, wherein the storage container 110 is fixedly mounted at the bottom of the conductive portion 100, and the interior of the storage container 110 is a cavity for storing electrolyte. In the later stage of a pouch cell in use, when the electrolyte is insufficient, the electrolyte stored in the storage container 110 can be released outward to increase the electrolyte retention of the pouch cell, so that the pouch cell has sufficient electrolyte in the later stage of the cycle, thereby improving the cycle performance of the pouch cell and further increasing the service life of the pouch cell.

In this embodiment, the outer surface of the storage container 110 is coated with an insulating corrosion-resistant coating, and the material of the insulating corrosion-resistant coating is selected from the group consisting of epoxy resin, polytetrafluoroethylene, silicone rubber, polyimide and a combination thereof and is used to increase the corrosion resistance and insulation of the storage container 110, thereby preventing the storage container 110 from contacting the roll core body 200 and the roll core tab 210 in the pouch cell and causing a short circuit.

Further, since the storage container 110 does not need to be conductive, the material of the storage container 110 may also be corrosion-resistant plastic. In a specific embodiment, the corrosion-resistant plastic may be polypropylene, polytetrafluoroethylene, and other materials with good chemical stability and heat resistance.

Preferably, the cross-sectional shape of the storage container 110 is circular; that is, the storage container 110 is cylindrical, and the cylindrical storage container 110 is conducive to storing a larger volume of electrolyte. In this embodiment, the shape of the storage container 110 is not limited to circular, and it may also be square or other shapes. The actual shape should be determined according to actual needs and the thickness of the roll core body 200.

As shown in FIG. 2, the cross-sectional shape of the conductive portion 100 is rectangular, and the cylindrical storage container is fixedly mounted at the bottom of the conductive portion 100.

Optionally, the storage container 110 of the tab structure is not limited to containing electrolyte but may also be used to contain a fire extinguishing material, which is released in an emergency to improve the safety performance of the battery cell. It is worth noting that the electrolyte may not be contained after the fire extinguishing material is filled, so for the storage container, the content contained inside can be selected according to the actual needs of the battery.

In this embodiment, the tab structure is made of a metal material by a punching process.

In this embodiment, the tab structure has a storage container 110 provided on the conductive portion 100 for storing electrolyte. In addition to the connection function, the tab structure also has the function of storing electrolyte, thereby increasing the electrolyte retention of cells. In the later stage of a cell in use, when the electrolyte inside the cell is insufficient, the electrolyte in the storage container 110 is released, thereby improving the cycle performance of the cell and further increasing the service life of the cell. The electrolyte in the storage container 110 can replenish the needs of the battery cell in a timely manner as the electrolyte in the cell is consumed, thereby improving the cycle performance of the cell.

### Embodiment 2

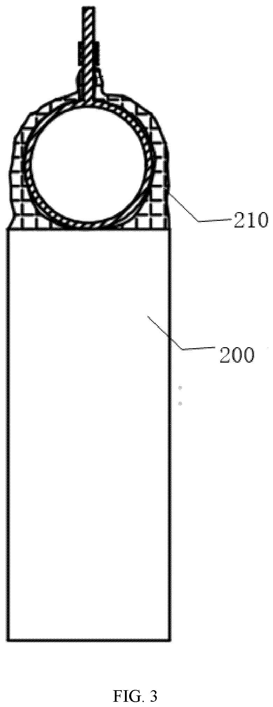

As shown in FIG. 3, this embodiment discloses a pouch cell, comprising a roll core body 200, a roll core tab 210, an aluminum-plastic film, and further comprising the tab structure in Embodiment 1. The width of the roll core body 200 is greater than the width of the storage container 110. The roll core tab 210 is split into two equal pieces. The bottom ends of the split pieces of the roll core tab 210 are respectively located on two sides of the top of the roll core body 200. The split pieces of the roll core tab 210 are arranged around the outer surface of the storage container 110 from bottom to top and are respectively fitted to the outer surface of the storage container 110 from two sides, and the tops of the split pieces of the roll core tab 210 are respectively connected to the conductive portion 100, thereby connecting the roll core body 200 and the tab.

The roll core body 200, after being connected to the tab structure by the roll core tab 210, is placed in a punching pit of the aluminum-plastic film, and the aluminum-plastic film is connected to two sides of the conductive portion 100, thereby completing the top seal fixation.

Further, the storage container 110 is mounted directly above the roll core body 200.

The lower surface of the storage container 110 is close to the roll core body 200 but separated from the roll core body 200 by the insulating coating outside the storage container 110, and the split pieces of the roll core tab 210 on two sides are fitted to the outer surface of the storage container 110 from two sides. In this way, dents between the roll core body 200 and the storage container 110 can be effectively filled up, thereby preventing appearance defects caused by dents in the aluminum-plastic film in the subsequent electrolyte filling or exhaust process.

As shown in FIGS. 1 and 2, a first hot melt adhesive layer 300 is provided on each of the two sides of the conductive portion 100, and a second hot melt adhesive layer is provided inside the aluminum-plastic film. The roll core tab 210 of the roll core body 200 is fixedly connected to the tab structure by welding. When the aluminum-plastic film is connected to the tab structure, the second hot melt adhesive layer inside the aluminum-plastic film and the first hot melt adhesive layers 300 on the conductive portion 100 are fused at a high temperature and bonded together, thus completing the top seal packaging of the aluminum-plastic film.

As shown in FIG. 3, further, the first hot melt adhesive layer 300 is located above a joint between the roll core tab 210 and the conductive portion 100. Such a structural design is provided to package the roll core tab 210 in the aluminum-plastic film.

Optionally, the first hot melt adhesive layer 300 employs a PP adhesive, and the second hot melt adhesive layer employs a PP adhesive. The PP adhesive is a special adhesive for bonding or sealing polypropylene materials. Because it is difficult to effectively bond PP materials with smooth surfaces and high chemical inertness by ordinary adhesives, this type of adhesive is specially designed to solve the problem. The PP adhesive can provide good bonding force and has particularly optimized performance for PP, which is a relatively difficult-to-bond material.

The manufacturing process of the pouch cell in this embodiment is as follows:
The tab structure is arranged directly above the roll core body 200, and the split pieces of the roll core tab 210 on two sides are fitted along the outer surface of the storage container 110 and extended upward, and the top of the roll core tab 210 is welded to the conductive portion 100;
The tab structure and the roll core body 200 connected together are placed in the punching pit of the aluminum-plastic film, and the first hot melt adhesive layers 300 are arranged on two sides of the conductive portion 100;
the two sides of the aluminum-plastic film are fitted to the two sides of the conductive portion 100 and are connected to the two sides of the conductive portion 100 by the first hot melt adhesive layers 300 and the second hot melt adhesive layer, thus completing the top seal fixation;
then, the aluminum-plastic film is filled with electrolyte, and some electrolyte is stored in the storage container 110;
the activation, formation, aging, final sealing, and capacity separation of the pouch cell are carried out.

In this embodiment, the pouch cell comprises the tab structure which has a storage container 110 provided on the conductive portion 100 for storing electrolyte. In addition to the connection function, the tab structure also has the function of storing electrolyte, thereby increasing the electrolyte retention of cells. In the later stage of a cell in use, when the electrolyte inside the cell is insufficient, the electrolyte in the storage container 110 is released, thereby improving the cycle performance of the cell and further increasing the service life of the cell. In addition, the outer surface of the storage container 110 is coated with an insulating corrosion-resistant coating to prevent the battery body 200 from contacting the storage container110 and causing a short circuit. Before the roll core tab 210 and the tab structure are mounted in a case, the roll core tab 210 is made good use for filling up the concave space between the curved surface of the storage container 110 and the roll core body 200, so as to ensure that the aluminum-plastic film will not be dented or deformed in subsequent processes. The storage container110 is located between the top seal and the roll cell, thereby effectively utilizing the original structure and space for an ingenious arrangement without changing the main structure of the battery cell.

It is understandable that the above embodiments are merely exemplary embodiments used to illustrate the principle of the present disclosure, but the present disclosure is not limited thereto. For those of ordinary skill in the art, various modifications and improvements can be made without departing from the spirit and essence of the present disclosure, and these modifications and improvements are also considered to be within the scope of the present disclosure.

## Claims

1. A tab structure, **characterized by**, comprising a conductive portion (100) and a storage container (110), wherein the storage container (110 is fixedly mounted at the bottom of the conductive portion (100), and the interior of the storage container (110) is a cavity for storing electrolyte.

2. The tab structure according to claim 1, **characterized in that**, an outer surface of the storage container (110) is coated with an insulating corrosion-resistant coating.

3. The tab structure according to claim 2, **characterized in that**, the material of the insulating corrosion-resistant coating is selected from the group consisting of epoxy resin, polytetrafluoroethylene, silicone rubber, polyimide and a combination thereof.

4. The tab structure according to claim 3, **characterized in that**, a cross-sectional shape of the storage container (110) is circular.

5. The tab structure according to claim 3, **characterized in that**, a cross-sectional shape of the conductive portion (100) is rectangular.

6. A pouch cell, comprising a roll core body (200), a roll core tab (210) and an aluminum-plastic film, **characterized by**, further comprising the tab structure according to any one of claims 1 to 5, wherein
the width of the roll core body 200 is greater than the width of the storage container (110), the roll core tab (210) is split into two equal pieces, and the split pieces of the roll core tab (210) are respectively fitted to the outer surface of the storage container (110) from two sides and are connected to the conductive portion (100),
the roll core body (200), after being connected to the tab structure, is placed in a punching pit of the aluminum-plastic film, and the aluminum-plastic film is connected to two sides of the conductive portion (100), thus completing top seal fixation.

7. The pouch cell according to claim 6, **characterized in that**, a first hot melt adhesive layer (300) is provided on each of two sides of the conductive portion (100), and a second hot melt adhesive layer is provided inside the aluminum-plastic film.

8. The pouch cell according to claim 7, **characterized in that**, the first hot melt adhesive layer (300) is located above a joint between the roll core tab (210) and the conductive portion (100).

9. The pouch cell according to claim 6, **characterized in that**, the first hot melt adhesive layer (300) employs a PP adhesive.

10. The pouch cell according to claim 6, **characterized in that**, the second hot melt adhesive layer employs a PP adhesive.
